# FASCICULE DE BREVET EUROPEEN

(11) **EP 1 599 375 B1**
(45) Date de publication et mention de la délivrance du brevet: **05.07.2006**
(21) Numéro de dépôt: 04703822.9
(22) Date de dépôt: 21.01.2004
(51) Int. Cl.: B62D 5/30, B62D 7/12, B62D 6/00, B62D 5/04, B62D 5/12

(54) **PROCEDE DE COMMANDE DE LA DIRECTION D UN VEHICULE AUTOMOBILE**
VERFAHREN ZUR RICHTUNGSSTEUERUNG EINES KRAFTFAHRZEUGS
METHOD FOR CONTROLLING THE DIRECTION OF A MOTOR VEHICLE

(30) Priorité: 11.02.2003 FR 0301591
(43) Date de publication de la demande: 30.11.2005
(73) Titulaire: RENAULT TRUCKS, 69800 St Priest (FR)
(72) Inventeur: RIESER, Eric, F-69008 Lyon (FR); DECHAMP, François, F-71250 Cluny (FR)
(74) Mandataire: Vuillermoz, Bruno
(86) Numéro de dépôt international: PCT/FR2004/050022
(87) Numéro de publication internationale: WO 2004/071846

(56) Documents cités:
- FR-A- 2 810 615
- US-A- 6 067 782
- US-A1- 2001 032 042
- US-A1- 2002 167 218
- US-A1- 2002 189 889

## Description

### Domaine technique

L'invention se rattache au domaine des systèmes de commande de direction équipant les véhicules automobiles, et notamment, mais non exclusivement, les véhicules industriels tels que les camions, confirme le préambule de la revendication 1.

Elle concerne plus spécifiquement les systèmes de direction dans lesquels le braquage des roues n'est pas obtenu par une transmission mécanique mais par le biais d'un ou plusieurs dispositifs mettant en oeuvre des circuits hydrauliques, électro-hydrauliques ou électriques. Ce type de direction est connu sous l'appellation "steer by wire". L'invention vise plus spécifiquement un procédé de commande de direction au moyen de ce type de système, visant à conserver un certain contrôle de la direction, au moment où les dispositifs de commande présentent une défaillance.

### Techniques antérieures

De façon générale, les systèmes de direction "steer by wire" agissent sur l'angle de braquage des roues au moyen d'un ou plusieurs actionneurs commandés en fonction de la position angulaire du volant, voire d'un manipulateur se présentant sous la forme d'un manche ou d'un levier, ou de façon plus générale de tout organe de commande de la direction.

Ces signaux sont généralement traités par une unité de commande électronique. Cette unité de commande électronique pilote différents composants électriques ou électro-hydrauliques associés à un actionneur qui permet de faire varier l'angle de braquage de la roue. Il existe également des systèmes purement hydrauliques qui permettent également à partir de la rotation du volant de commander une modification de l'angle de braquage des roues.

Certains de ces systèmes, notamment ceux décrits par le Demandeur dans le document FR 2 810 615 comportent deux dispositifs distincts, chacun dédié à la commande de l'angle de braquage d'une roue. En pratique, ces véhicules comportent deux circuits hydrauliques associés chacun à un actionneur responsable du braquage d'une des roues. Chacun de ces circuits hydrauliques est commandé par une unité de contrôle commande spécifique. Ce type de direction présente un inconvénient majeur lorsqu'un des dispositifs indépendants présente une défaillance. En effet, il est alors nécessaire d'établir une liaison mécanique entre les deux roues pour que leurs angles de braquage soient insensiblement égaux, aux corrections de parallélisme près. Cette liaison mécanique fonctionnant en mode dégradé est particulièrement difficile à mettre en oeuvre.

Le problème que se propose de résoudre l'invention est celui de gérer la défaillance d'un des systèmes assurant la commande de braquage d'une des roues, et ce au moins pour permettre au conducteur de pouvoir contrôler la direction jusqu'à l'arrêt du véhicule. Or, les sources de défaillance de ces circuits de commande sont multiples, du fait du nombre important d'éléments mis en oeuvre. Outre les éventuelles pannes résultant d'une rupture mécanique, on peut principalement citer les défaillances dues à des problèmes survenant dans les composants hydrauliques ou électro-hydrauliques, mais surtout dans les unités de contrôle commande électronique.

D'un point de vue mécanique, les systèmes de direction comportent une articulation de la roue par rapport au châssis du véhicule se présentant sous la forme d'un pivot. Ce pivot n'est pas exactement vertical, mais très légèrement orienté vers l'avant et vers l'extérieur, selon un angle de chasse et un angle de pivot. De ce fait, lorsque le dispositif qui assure la variation de l'angle de braquage devient inactif, et laisse donc la roue s'orienter naturellement, celle-ci a tendance à s'orienter en se braquant vers l'intérieur. Ce braquage inopiné de la roue peut donc modifier la trajectoire et conduire à une perte de contrôle du véhicule.

Un autre problème que cherche à résoudre l'invention est celui d'éviter le braquage intempestif et incontrôlé de la roue en cas de défaillance du système de commande du braquage de cette roue.

### Exposé de l'invention

L'invention concerne donc un procédé de commande de la direction d'un véhicule automobile, dans lequel l'angle de braquage de chaque roue est commandé indépendamment par un dispositif dédié à une roue. Mécaniquement, chaque roue est articulée par rapport au châssis du véhicule au niveau d'une articulation dont l'axe est sensiblement vertical, et orienté légèrement vers l'avant et l'extérieur.

Conformément la partie charactérisante de la revendication 1, le procédé de commande de direction se caractérise en ce qu'en cas de défaillance d'un des dispositifs de commande du braquage d'une des roues, on agit sur l'angle de braquage en appliquant un effort de freinage sur la roue en question.

Autrement dit, pour compenser la tendance naturelle de la roue, qui n'est plus guidée en direction, à braquer vers l'intérieur, on exerce un effort de freinage sur la roue, de sorte que la réaction s'opposant à cet effort de freinage provoque un braquage de la roue libre vers l'extérieur. En d'autres termes, on exerce cet effort de freinage pour compenser le braquage naturel vers l'intérieur, ce qui permet de conserver une certaine maîtrise sur la direction de la roue associée au système défaillant.

En pratique, chaque dispositif de commande du braquage d'une roue comporte un actionneur, piloté directement ou indirectement par une unité de commande. Dans un mode de gestion particulier, on peut rendre cet actionneur inactif en cas de défaillance du dispositif de commande du braquage associé, et notamment de l'unité de commande électronique. Par "rendre inactif', on entend que l'actionneur est mis dans une configuration telle qu'il ne s'oppose pas au braquage naturel de la roue. Dans le cas par exemple d'un actionnement hydraulique par un vérin, on pourra rendre inactif le vérin en mettant en communication ses deux chambres.

L'influence du vérin ainsi neutralisé, ou plus généralement de l'actionneur rendu inactif, se réduit alors à un simple amortissement. Cet amortissement peut être optimisé pour conserver une réactivité correcte de la roue. Cet amortissement est maintenu au dessus d'une valeur minimale pour gommer les imperfections du freinage. Il ne doit pas toutefois être trop faible, au risque de voir la roue adopter un comportement aléatoire, fonction des imprécisions du freinage et de la qualité du contact roue-chaussée.

En pratique, l'effort de freinage appliqué sur la roue dont le braquage était commandé par le dispositif défaillant peut être régulé, pour conserver un angle de braquage de la roue dans une plage prédéterminée, définie par une consigne et une tolérance. En effet, il est ainsi possible de conserver l'angle de braquage de la roue sensiblement égal à celui qu'il était juste avant la défaillance, de manière à maintenir le véhicule dans la courbe qui était déjà initiée.

En pratique, cet angle de braquage peut être déterminé grâce au dispositif de commande de braquage de la roue considérée, si celui-ci est encore capable d'élaborer une information permettant d'en déduire la position angulaire de la roue.

On peut également prévoir que l'angle de braquage servant à la régulation peut être déterminé à partir du dispositif de commande de braquage de la roue opposée. Dans ce cas notamment, il sera possible de faire varier l'effort de freinage afin que les deux roues braquent dans la même direction, aux approximations de parallélisme près.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est un schéma général synoptique montrant un exemple de réalisation d'un système de direction conforme à l'invention.
La figure 2 est une vue de côté de la roue droite directrice montrant l'inclinaison vers l'avant du pivot de direction.
La figure 3 est une vue de dessus de la roue de la figure 2.
La figure 4 est une vue de face de la roue de la figure 2, montrant l'inclinaison vers l'extérieur du pivot de direction.

### Manière de réaliser l'invention

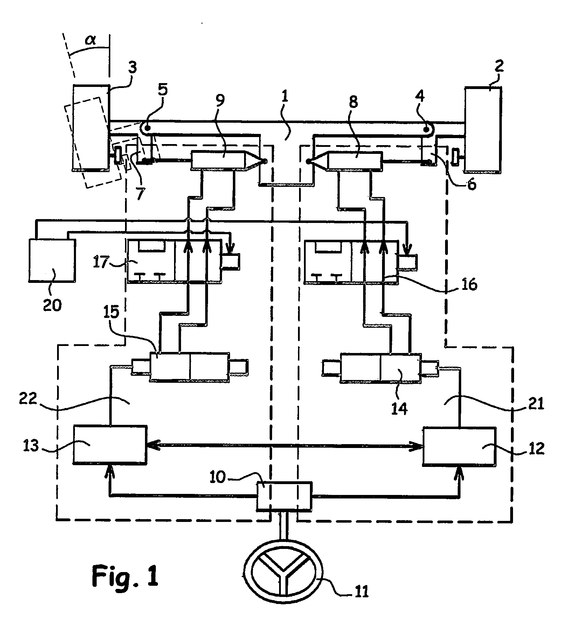

Comme déjà évoqué, l'invention concerne un procédé de commande de direction qui peut être réalisé de différentes manières, notamment selon le mode de réalisation exposé à la figure 1.

Ainsi, on observe à la figure 1 l'essieu (1) sur lequel sont montées les deux roues directrices (2, 3). Ces deux roues directrices (2, 3) sont articulées par rapport à l'essieu (1) au niveau de pivots de direction (4, 5). Les bielles de direction (6, 7) sont reliées à deux actionneurs (8, 9), qui dans la forme illustrée, peuvent être des distributeurs hydrauliques, mais qui pourraient être réalisés selon d'autres technologies, notamment électriques sans sortir du cadre de l'invention.

La commande de chaque actionneur (8, 9) se fait de manière indépendante, à partir d'une information issue d'un capteur (10), et représentative de l'angle de rotation de l'organe de direction (11), qui dans la forme illustrée, est un volant. Cette information angulaire est traitée par l'unité de commande électronique (12, 13) qui est propre au dispositif (21, 22) de commande de braquage d'une des roues (2, 3). Ces unités de commande électronique (12, 13) peuvent dialoguer et échanger un certain nombre d'informations, notamment pour le fonctionnement en mode dégradé.

Un véhicule comporte en général deux dispositifs (21, 22) de commande du braquage, comportant chacun une unité de commande électronique (12, 13) qui génère un signal électrique permettant de commander un distributeur hydraulique (14, 15), lui-même alimentant le vérin (8, 9) à travers une vanne de by-pass (16, 17).

Le fonctionnement de l'invention dépend notamment de la géométrie de l'articulation de la roue (2, 3) par rapport à l'essieu directeur (1), et notamment de l'inclinaison de l'axe du pivot d'articulation (4, 5).

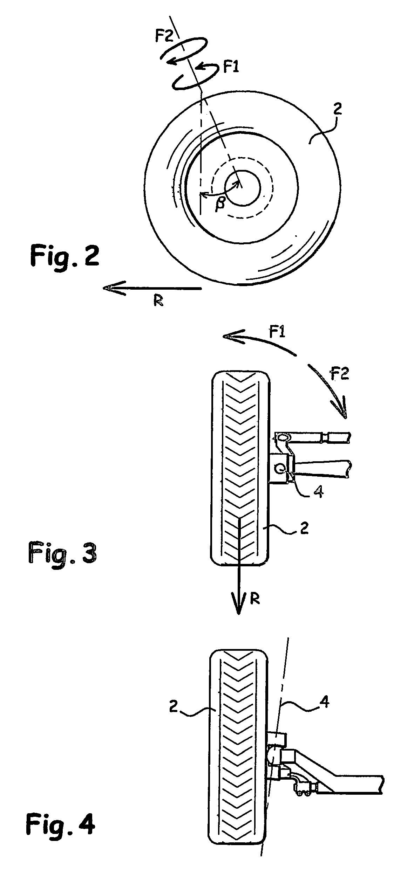

Plus précisément, et comme illustré à la figure 2, l'axe du pivot d'articulation (4) est incliné vers l'avant, selon un angle de chasse β mesuré par rapport à la verticale.

Comme illustré à la figure 4, l'axe du pivot d'articulation (4) est également incliné latéralement, selon un angle de pivot de roue. Il s'ensuit, comme illustré à la figure 3 que dans le cas où la roue (2) est libre, et ne subit donc plus les effets de la bielle de direction (6), elle a tendance naturellement à s'orienter vers l'intérieur, selon la flèche F1.

Conformément à l'invention, pour compenser cette tendance naturelle au braquage vers l'intérieur, on applique sur la roue (2) un effort de freinage, qui se traduit au niveau de la roue (2) par une réaction R, tendant à braquer la roue (2) en question vers l'extérieur, selon la flèche F2 des figures 2 et 3.

Lorsque cet effort de freinage est correctement dosé, il compense la tendance au braquage vers l'intérieur de la roue (2), et permet donc de conserver un angle de braquage sensiblement constant, permettant au conducteur de conserver la maîtrise de son véhicule jusqu'à l'arrêt de ce dernier.

En pratique, on préfère neutraliser l'actionneur (8) qui est responsable du braquage d'une roue (2), pour en limiter l'influence. Ainsi, et comme illustré à la figure 1, cette neutralisation peut par exemple intervenir en commandant la vanne de by-pass (16) de telle manière que les deux chambres du vérin (8) se trouvent en communication. Dans ce cas, l'influence du vérin (8) est limitée à l'amortissement consécutif au transit hydraulique dans la vanne de by-pass (16). Cette neutralisation permet également de s'affranchir d'une commande issue de l'électronique de commande défaillante, qui positionnerait le distributeur (14) dans une configuration préjudiciable.

La commande de ces vannes (16, 17) peut être réalisée par une unité de contrôle électronique spécifique (20) gérant la supervision de l'ensemble et les transitions vers les modes dégradés.

En pratique, le calcul de l'effort lié au freinage nécessaire pour maintenir l'angle de braquage constant peut se faire de différentes manières. Ainsi, une unité de commande électronique (20) dédiée à la fonction de freinage peut recevoir des informations sur le bon fonctionnement des différents dispositifs (21, 22) de commande de braquage dédiés à chaque roue (2, 3).

Lorsque l'un de ces dispositifs (21, 22) est défaillant, l'unité (20) peut déterminer l'effort de freinage qu'il convient d'appliquer à la roue (2) en question à partir d'une information représentative de l'angle de braquage de cette dernière. Cette information peut soit émaner d'un capteur associé à la commande de braquage de la roue (2) en question, soit émaner d'un capteur associé à la commande de braquage de l'autre roue (3). Il peut s'agir d'un capteur de position associé au vérin (8) du dispositif (21) de braquage défaillant. Il peut également s'agir d'une information relative au braquage de l'autre roue (3), à partir de laquelle il est possible de déduire l'angle de braquage de la roue défaillante (2), en tenant compte de la géométrie du parallélisme, et par exemple par l'intermédiaire des épures de Jeantaud.

Il ressort de ce qui précède que le procédé de commande de direction conforme à l'invention permet de conserver un certain angle de braquage, limitant ainsi la proportion naturelle de la roue à braquer vers l'intérieur, lorsque son dispositif de commande est défaillant.

## Revendications

1. Procédé de commande de la direction d'un véhicule automobile, dans lequel l'angle de braquage de chaque roue (2, 3) est commandé indépendamment par un dispositif (21, 22) dédié à une roue (2, 3), chaque roue (2, 3) étant articulée par rapport au châssis du véhicule au niveau d'une articulation (4, 5) dont l'axe est sensiblement vertical, et orienté légèrement vers l'avant et l'extérieur, **caractérisé en ce qu'**en cas de défaillance d'un des dispositifs (21, 22) de commande du braquage d'une des roues (2, 3), on agit sur l'angle de braquage en appliquant un effort de freinage sur la roue (2, 3) en question.

2. Procédé de commande selon la revendication 1, **caractérisé en ce que** chaque dispositif (21, 22) de commande de braquage d'une roue (2, 3) comporte un actionneur (8, 9) qui est rendu inactif en cas de défaillance du dispositif (21, 22) de commande de braquage.

3. Procédé de commande selon la revendication 2 dans lequel l'actionneur (8, 9) est un vérin hydraulique, **caractérisé en ce que** les deux chambres du vérin sont reliées en cas de défaillance.

4. Procédé de commande selon la revendication 1, **caractérisé en ce que** l'effort de freinage appliqué (sur la roue (2, 3) dont le braquage est commandé par le dispositif (21, 22) défaillant) est régulé pour conserver un angle de braquage de la roue (2, 3) dans une plage pré-déterminée.

5. Procédé de commande selon la revendication 4, **caractérisé en ce que** l'angle de braquage est déterminé grâce au dispositif (21, 22) de commande de braquage de la roue (2, 3) considérée.

6. Procédé de commande selon la revendication 4, **caractérisé en ce que** l'angle de braquage est déterminé grâce au dispositif (21, 22), de commande de braquage de la roue (2, 3) opposée.

## Claims

1. A method for controlling the direction of a motor vehicle in which the steering angle of each wheel (2, 3) is independently controlled by a device (21, 22) dedicated to one wheel (2, 3), each wheel (2, 3) being articulated relative to the chassis of the vehicle by means of a joint (4, 5), the axis of which is substantially vertical and slightly pointing forwards and outwards, **characterised in that**, in the case of failure of one of said devices (21, 22) for controlling the steering of one of the wheels (2, 3), the steering angle of said wheel is obtained by applying a braking force to the wheel (2, 3) in question.

2. A method of control as claimed in claim 1, **characterised in that** each device (21, 22) for controlling the steering of one wheel (2, 3) comprises an actuator (8, 9) which is rendered inactive in the case of failure of device (21, 22) for controlling the steering.

3. A method of control as claimed in claim 2 in which the actuator (8, 9) is a hydraulic cylinder, **characterised in that** the two chambers of the cylinder are linked in the case of failure.

4. A method of control as claimed in claim 1, **characterised in that** the braking force applied (to wheel (2, 3) the steering of which is controlled by faulty device (21, 22)) is adjusted in order to preserve a steering angle of wheel (2, 3) in a predetermined range.

5. A method of control as claimed in claim 4, **characterised in that** the steering angle is determined by means of device (21, 22) for controlling the steering of the wheel (2, 3) in question.

6. A method of control as claimed in claim 4, **characterised in that** the steering angle is determined by means of device (21, 22) for controlling the steering of the opposite wheel (2, 3).

## Patentansprüche

1. Lenksteuerungsverfahren für ein Kraftfahrzeug, bei dem der Einschlagwinkel jedes Rads (2, 3) in unabhängiger Weise von einer einem Rad (2, 3) zugeordneten Vorrichtung (21, 22) gesteuert wird, wobei jedes Rad (2, 3) in Bezug auf das Fahrgestell des Fahrzeugs in Höhe eines Gelenks (4, 5) angelenkt ist, dessen Achse im wesentlichen vertikal und leicht nach vorn und außen ausgerichtet ist, **dadurch gekennzeichnet, dass** im Falle des Versagens einer der Vorrichtungen (21, 22) zur Steuerung des Einschlags eines der Räder (2, 3) auf den Einschlagwinkel eingewirkt wird, indem eine Bremskraft an das betreffende Rad (2, 3) angelegt wird.

2. Steuerungsverfahren nach Anspruch 1, **dadurch gekennzeichnet, dass** jede Vorrichtung (21, 22) zur Steuerung des Einschlags eines Rads (2, 3) ein Stellorgan (8, 9) umfasst, das im Falle des Versagens der Vorrichtung (21, 22) zur Einschlagsteuerung inaktiviert wird.

3. Steuerungsverfahren nach Anspruch 2, bei dem das Stellorgan (8, 9) ein Hydraulikzylinder ist, **dadurch gekennzeichnet, dass** die beiden Kammern des Zylinders im Falle des Versagens verbunden werden.

4. Steuerungsverfahren nach Anspruch 1, **dadurch gekennzeichnet, dass** die angelegte Bremskraft (am Rad (2, 3), dessen Einschlag von der versagenden Vorrichtung (21, 22) gesteuert wird) geregelt wird, um einen Einschlagwinkel des Rads (2, 3) in einem vorbestimmten Bereich zu halten.

5. Steuerungsverfahren nach Anspruch 4, **dadurch gekennzeichnet, dass** der Einschlagwinkel durch die Vorrichtung (21, 22) zur Steuerung des Einschlags des betrachteten Rads (2, 3) bestimmt wird.

6. Steuerungsverfahren nach Anspruch 4, **dadurch gekennzeichnet, dass** der Einschlagwinkel durch die Vorrichtung (21, 22) zur Steuerung des Einschlags des gegenüberliegenden Rads (2, 3) bestimmt wird.
